# FASCICULE DE BREVET EUROPEEN

(11) **EP 3 579 036 B1**
(45) Date de publication et mention de la délivrance du brevet: **16.03.2022**
(21) Numéro de dépôt: 19177331.6
(22) Date de dépôt: 29.05.2019
(51) Int. Cl.: G02B 6/44, G02B 6/38

(54) **MODULE DE TÉLÉCOMMUNICATION OPTIQUE EN MATIÊRE PLASTIQUE ET DISPOSITIF DE TELS MODULES PIVOTANTS**
OPTISCHES TELEKOMMUNIKATIONSMODUL AUS KUNSTSTOFF, UND VORRICHTUNG FÜR SOLCHE SCHWENKBAREN MODULE
OPTICAL TELECOMMUNICATION MODULE MADE FROM PLASTIC MATERIAL AND DEVICE FOR SUCH PIVOTING MODULES

(30) Priorité: 07.06.2018 FR 1854945
(43) Date de publication de la demande: 11.12.2019
(73) Titulaire: Nexans, 92400 Courbevoie (FR)
(72) Inventeur: DEVAUX, Julien, 08160 Chalandry-Elaire (FR); LIMA, Cyril, 08200 Sedan (FR); THORN, Nicolas, 08090 This (FR)
(74) Mandataire: Ipsilon

(56) Documents cités:
- WO-A1-2018/076249
- CN-U- 204 065 512
- CN-Y- 2 437 082
- US-A- 5 100 221
- US-A1- 2012 152 463
- US-A1- 2014 185 992

## Description

L'invention concerne un module de télécommunication optique en matière plastique et un dispositif de tels modules pivotants.

Le document WO2018/076249 divulgue un
module de télécommunication optique. Un autre module de télécommunication optique en matière plastique connu est décrit dans le document de brevet WO 2010/077577.

Ce module comporte un boîtier en matière plastique et une plaque d'adaptation frontale également en matière plastique montée à l'avant du module et formant un panneau de brassage destiné à recevoir une pluralité de connecteurs.

En particulier lorsque le module est de capacité et de largeur importante, il s'avère qu'il peut se présenter un risque de déformation en flexion du module.

L'invention résout ce problème par un agencement relativement simple et robuste.

Pour ce faire, l'invention concerne un module de télécommunication optique selon la revendication 1.

Avantageusement, ladite plaque d'adaptation frontale est vissée latéralement sur ledit boîtier.

Ladite plaque d'adaptation frontale peut être en acier.

Ladite plaque d'adaptation frontale est une plaque
de brassage pourvue d'une pluralité d'orifices destinés à recevoir chacun au moins un connecteur et chaque dit orifice présente une bride arrière latérale, destinée à pré-contraindre une lame ressort desdits connecteurs.

L'invention concerne également un dispositif de modules pivotants de télécommunication optique en matière plastique selon la revendication 4.

Le même module peut ainsi être monté avec un axe de pivotement à droite ou à gauche en vue de face, ou autrement dit avec une rotation horaire ou antihoraire.

Il est ainsi obtenu une standardisation et une réduction du nombre d'ordres de fabrication. Le stockage est grandement facilité.

Par ailleurs, le montage est facilité sur le terrain puisque le montage du module sur la pièce de support peut s'effectuer sur le terrain. Ainsi, le produit installé peut ne devenir avec un axe de pivotement à gauche ou avec un axe de pivotement à droite qu'au moment de la phase d'installation. Le découplage de cette pièce de support et du module facilite la mise en place.

Selon un mode de réalisation préféré, lesdits deux ensembles d'au moins un second agencement de pivotement latéraux sont aptes à être clipsés sur le ou les premier agencement(s) de pivotement de ladite pièce de support.

De préférence, ledit premier agencement de pivotement est un pivot et ledit second agencement de pivotement est une cavité de pivotement.

Selon un premier mode de réalisation, lorsque la hauteur du module est réduite et égale à une unité standardisée, l'intérieur dudit module présente un fond apte à recevoir un ensemble de pièces permettant le guidage et/ou l'épissurage et/ou l'accueil de systèmes de couplage et/ou le stockage de fibres optiques, agencées de façon à permettre un montage réversible à gauche ou à droite dudit plan.

Selon un second mode de réalisation, lorsque la hauteur du module est plus importante et égale à plusieurs unités standardisées, l'intérieur dudit module comporte une platine pivotante apte à recevoir un ensemble de pièces permettant le guidage et/ou l'épissurage et/ou l'accueil de systèmes de couplage et/ou le stockage de fibres optiques, agencées de façon à permettre un montage réversible à gauche ou à droite dudit plan.

L'invention est décrite ci-après plus en détail à l'aide de figures ne représentant qu'un mode de réalisation préféré de l'invention.

Les figures 1 et 2 sont des vues frontales en perspective d'un
dispositif de modules pivotants de télécommunication optique conforme à l'invention avec un module pivotant à gauche, en position fermée et d'une hauteur d'une unité standardisée.

La figure 3 est une vue en perspective arrière d'un dispositif de modules pivotants de télécommunication optique conforme à l'invention avec un module pivotant à gauche, en position fermée et d'une hauteur d'une unité standardisée.

Les figures 4 et 5 sont des vues frontale et de dessus d'un connecteur de brassage.

La figure 6 est une vue en perspective arrière d'un dispositif de modules pivotants de télécommunication optique conforme à l'invention avec un module pivotant à droite, en position fermée et d'une hauteur de plusieurs unités standardisées.

La figure 7 est une vue en perspective de détail d'un module d'une hauteur de plusieurs unités standardisées conforme à l'invention.

Bien que sur les figures ne soit représenté qu'un seul module, un dispositif de modules pivotants de télécommunication optique comporte en général une pluralité de modules pivotants superposés.

Selon les configurations, ces modules peuvent être plus ou moins haut et contenir un certain nombre de connexions, de cassettes, d'agencements d'épissurage, etc...

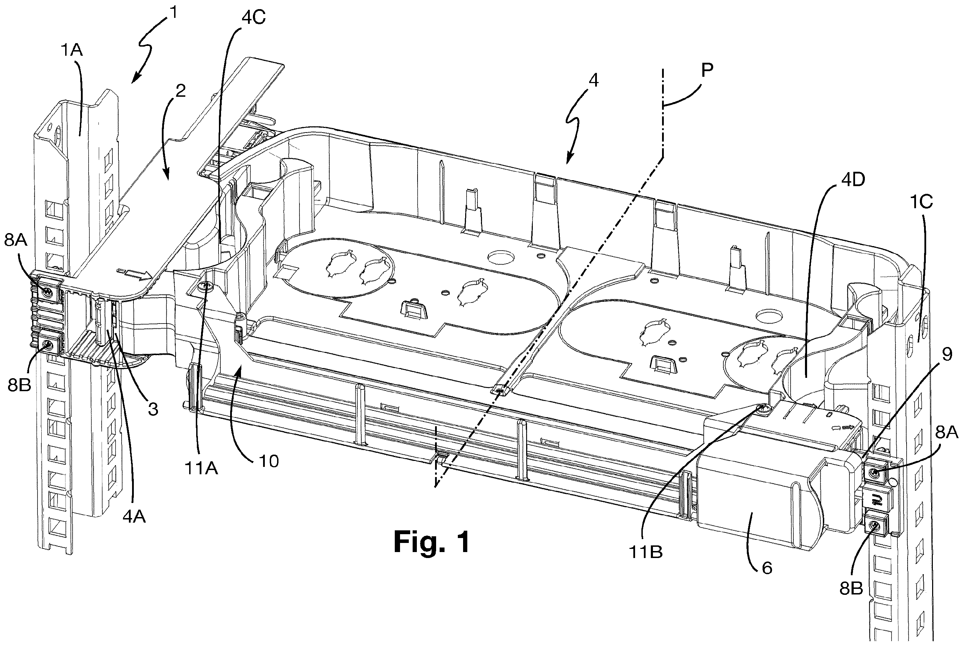

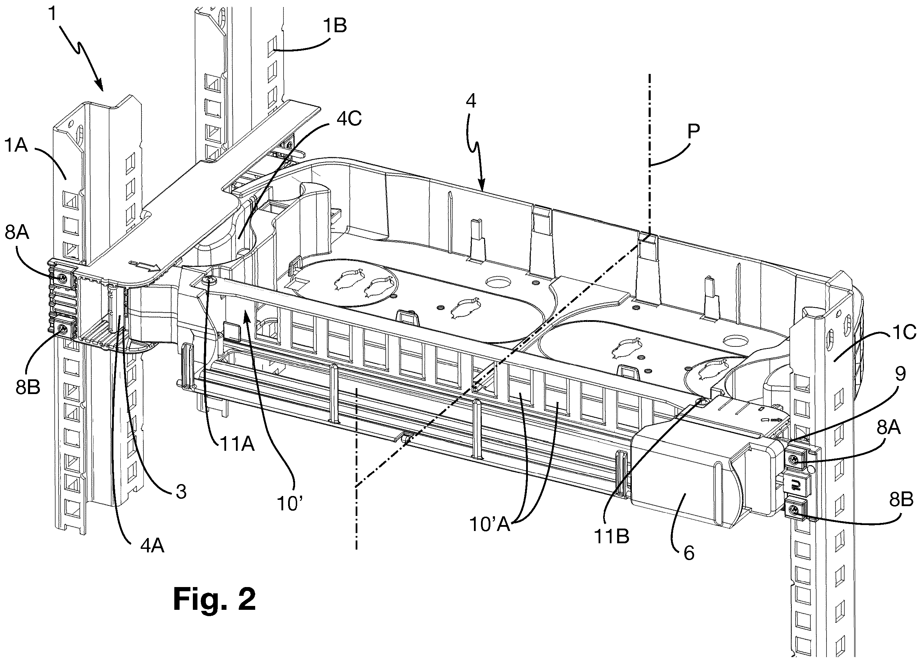

Comme illustré sur les figures 1 et 2, un dispositif de modules pivotants de télécommunication optique en matière plastique, par exemple en polycarbonate renforcé de fibres de verre, conforme à l'invention, comporte un châssis de montage 1 supportant pour chaque module une pièce de support 2 comportant un pivot cylindrique 3.

Le module est ici représenté dépourvu d'équipements et de capot.

La pièce de support 2 est fixée ici latéralement sur deux profilés 1A, 1B du châssis de montage, dont un seul est représenté 1A sur la figure 1. Un troisième profilé 1C actif est situé de l'autre côté du module.

Chaque module 4 comporte deux cavités de pivotement latérales dont l'une 4A est clipsée sur le pivot cylindrique 3 de la pièce support 2.

Chaque module 4 est conformé de façon quasi symétrique par rapport à un plan transversal central P du module. Plus précisément, les deux cavités de pivotement sont symétriques par rapport au plan transversal central P du module et aptes à être clipsées l'une sur le pivot d'une pièce de support 2 montée à gauche du plan P ou l'autre sur le pivot d'une pièce de support 2 montée à droite du plan P.

Le même module peut ainsi être monté avec un axe de pivotement à droite ou à gauche en vue de face, ou autrement dit avec une rotation horaire ou antihoraire

Il comporte deux canaux de guidage symétriques 4C, 4D des fibres optiques. Ces canaux possèdent une zone plus large située dans la partie pivotante du module 4 au plus proche du pivot de la pièce de support 2.

La pièce de support 2 est fixé par clipsage sur le profilé 1A standardisé perforé d'orifices régulièrement répartis verticalement du châssis de montage 1.

Pour ce faire, la pièce de support 2 comporte deux ouvertures de même distance que deux orifices du profilé 1A ; une douille est clipsée dans chacune de ces ouvertures; ces douilles sont disposées en vis-à-vis des orifices du profilé 1A et clipsées dans ceux-ci et un pion de blocage 8A, 8B est clipsé dans chaque douille introduite dans chaque orifice et ouverture.

Un loquet 6 est solidarisé au module 4 du côté de sa face frontale opposé au pivot 3 et cache l'autre cavité de pivotement. Il coopère avec une pièce de fermeture 9 également clipsée sur le rail 1C correspondant.

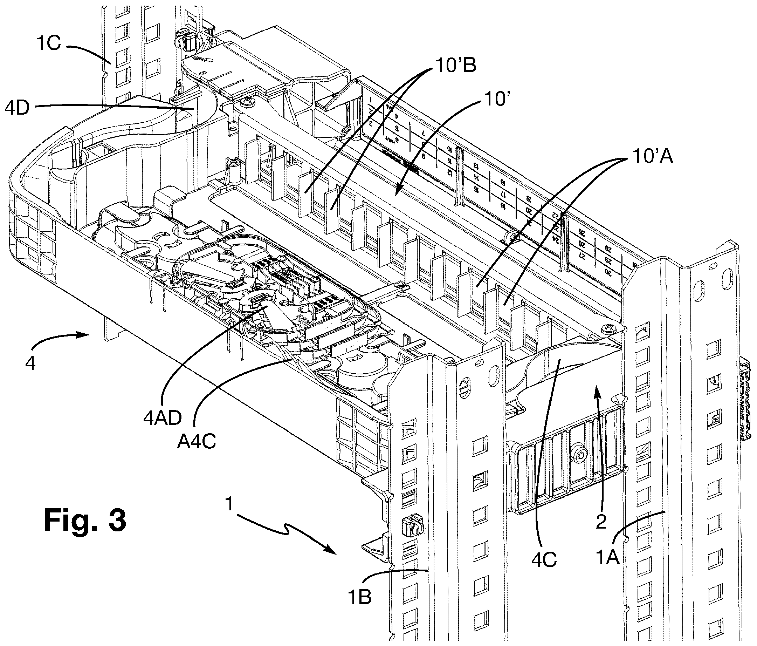

Selon les figures 1 à 3, la hauteur du module est réduite et égale à une unité standardisée et l'intérieur du module 4 présente un fond apte à recevoir comme visible sur la figure 3, un ensemble de pièces permettant le guidage 4AC et/ou l'épissurage 4AD et/ou l'accueil de systèmes de couplage et/ou le stockage de fibres optiques, agencées de façon à permettre un montage réversible à gauche ou à droite dudit plan.

Le module de télécommunication optique 4 comporte donc un boîtier en matière plastique et une plaque d'adaptation frontale 10 montée à l'avant du module, en métal, et de préférence en acier.

Selon un mode de réalisation préféré, ladite plaque d'adaptation frontale est vissée latéralement sur ledit boîtier. Cette plaque frontale 10 est vissée latéralement sur ledit boîtier au moyen de deux vis latérales 11A, 11B.

Comme représentée sur la figure 1, la plaque d'adaptation frontale 10 est ouverte sur la majeure partie de la largeur du module 4 et ce dernier est destiné à permettre un stockage des fibres optiques.

Comme représentée sur la figure 2, la plaque d'adaptation frontale 10' est une plaque de brassage pourvue d'une pluralité d'orifices 10'A destinés à recevoir chacun au moins un connecteur 20 et chaque orifice 10'A présente une bride arrière latérale 10'B visible sur la figure 3, destinée à pré-contraindre une lame ressort 20B des connecteurs 20.

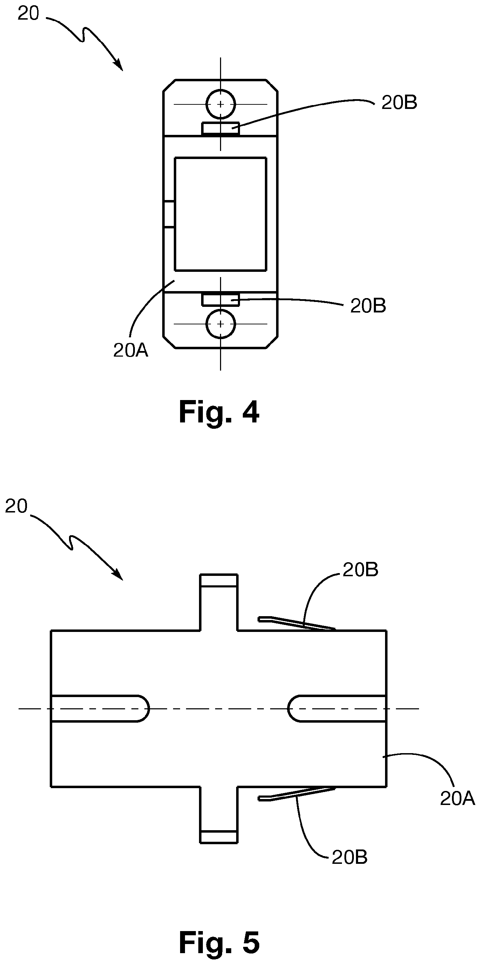

Un connecteur 20 est représenté sur les figures 4 et 5.

Solidarisées à des faces latérales perpendiculaires à la face d'introduction 20A du connecteur, deux lames ressorts 20B assurent le maintien en position de chaque connecteur 20 dans les orifices 10'A.

Grâce à la bride arrière latérale 10'B équipant chaque orifice 10'A de la plaque d'adaptation frontale 10', une des lames ressorts est compressée et pré-contrainte contre cette bride 10'B lors de son introduction dans l'orifice 10'A. Il est ainsi aisé de connecter le connecteur et également de le déconnecter, par une simple pression sur l'autre lame ressort perpendiculairement à la bride 10'B.

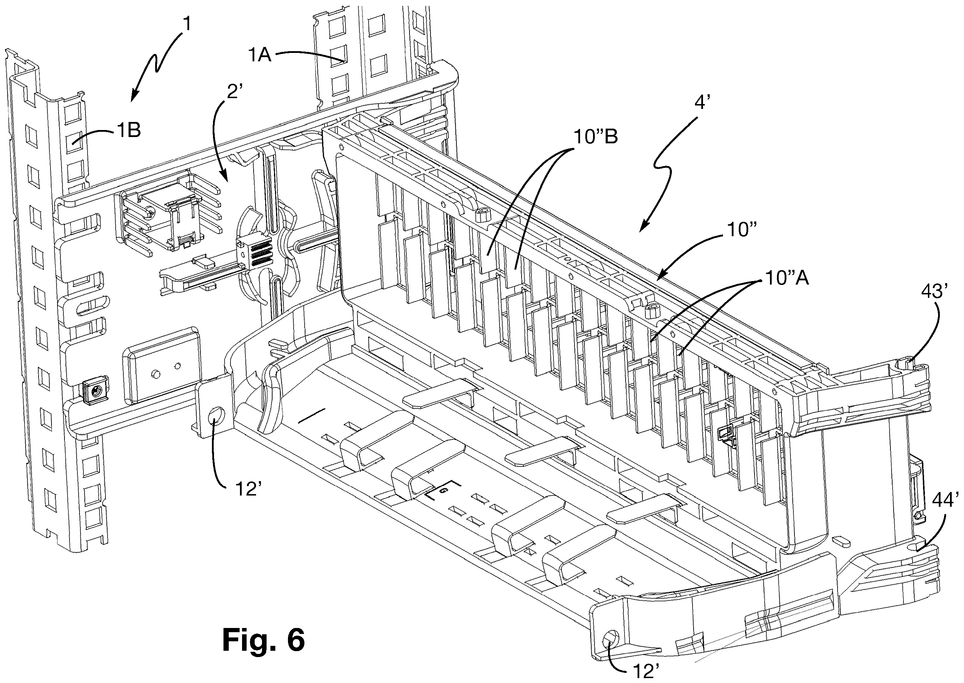

Le module conforme à l'invention précédemment décrit est d'une hauteur réduite d'une unité, mais l'invention s'applique également à un module d'une hauteur supérieure de plusieurs unités, comme par exemple illustré sur la figure 6.

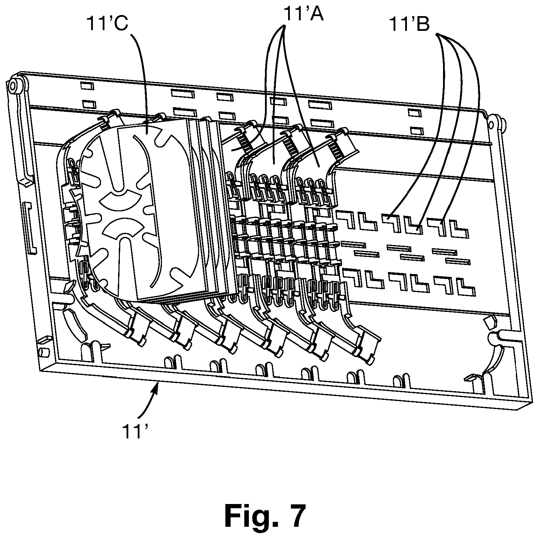

Le module 4', ici représenté sans capot et monté à droite, comporte alors une base sur laquelle est montée une platine pivotante du type de celle 11' représentée seule sur la figure 7 et apte à recevoir un ensemble de pièces permettant le guidage 11'A et/ou l'épissurage 11'C et/ou l'accueil de systèmes de couplage et/ou le stockage de fibres optiques, agencées de façon à permettre un montage réversible à gauche ou à droite dudit plan, grâce à des orifices de clipsage adéquats 11'B.

Cette platine 11' est clipsée sur des orifices de pivotement 12' agencés sur la base du module 4'.

Comme précédemment, le dispositif de modules pivotants de télécommunication optique en matière plastique comporte un châssis de montage 1 supportant pour chaque module 4' une pièce de support 2' comportant ici deux pivots cylindriques de même axe.

La pièce de support 2' est fixée latéralement à droite, ici sur deux profilés 1A, 1B, du châssis de montage. Un troisième profilé 1C actif est situé de l'autre côté du module.

Chaque module 4' comporte deux ensembles de deux cavités de pivotement latérales de même axe dont seules deux sont visibles 43', 44' car dépourvues de loquet et dont deux cavités symétriques latérales sont clipsées sur les pivots cylindriques de la pièce support 2'.

Comme vu précédemment, un tel module est également équipé d'un loquet et un système de fixation et de rattrapage non représentés.

Comme précédemment, la plaque d'adaptation frontale 10" est une plaque de brassage pourvue d'une pluralité d'orifices 10"A destinés à recevoir chacun au moins un connecteur 20 et chaque orifice 10"A présente une bride arrière latérale 10"B, destinée à pré-contraindre une lame ressort 20B des connecteurs 20.

## Revendications

1. Module (4, 4′) de télécommunication optique comportant un boîtier en matière plastique et une plaque d'adaptation frontale (10, 10′, 10ʺ) montée à l'avant du module, ladite plaque d'adaptation frontale (10, 10′, 10ʺ) étant en métal et
étant une plaque de brassage pourvue d'une pluralité d'orifices (10′A, 10ʺA) destinés à recevoir chacun au moins un connecteur (20) **caractérisé en ce que** chaque dit orifice (10′A, 10ʺA)
présente une bride arrière latérale (10′B, 10ʺB), destinée à pré-contraindre une lame ressort (20B) desdits connecteurs.

2. Module selon la revendication 1, **caractérisé en ce que** ladite plaque d'adaptation frontale (10, 10′, 10ʺ) est vissée latéralement sur ledit boîtier.

3. Module selon la revendication 1 ou 2, **caractérisé en ce que** ladite plaque d'adaptation frontale (10, 10′, 10ʺ) est en acier.

4. Dispositif de modules pivotants de télécommunication optique en matière plastique comprenant au moins un châssis de montage (1A, 1B, 1C), au moins un module de télécommunication optique (4, 4′) selon l'une des revendications précédentes, et une pièce de support latérale (2, 2′) pour chaque module , ledit module étant destiné à être supporté par le châssis de montage par l'intermédiaire de ladite pièce de support latérale, le dispositif étant **caractérisé en ce que** la pièce de support latérale (2) comporte au moins un premier agencement de pivotement cylindrique (3), le module comportant au moins un second
agencement de pivotement latéral (4A, 43′, 44′) configuré pour être lié sur ledit premier agencement de pivotement, ledit module comportant deux ensembles d'au moins un second agencement de pivotement latéraux symétriques (4A, 43′, 44′) par rapport à un plan transversal central (P) du module et configurés pour être liés l'un sur le ou les premier agencement(s) de pivotement d'une pièce de support (2, 2′) montée à gauche dudit plan (P) ou l'autre sur le ou les premier agencement(s) de pivotement d'une pièce de support (2, 2′) montée à droite dudit plan (P).

5. Dispositif selon la revendication précédente, **caractérisé en ce que** lesdits deux ensembles d'au moins un second agencement de pivotement latéraux (4A, 43′, 44′) sont configurés pour être clipsés sur le ou les premier agencement(s) de pivotement de ladite pièce de support (2, 2′).

6. Dispositif selon la revendication précédente, **caractérisé en ce que** ledit premier agencement de pivotement est un pivot et ledit second agencement de pivotement est une cavité de pivotement.

7. Dispositif selon la revendication 5 ou 6, **caractérisé en ce que** l'intérieur dudit module (4) présente un fond configuré pour recevoir un ensemble de pièces permettant le guidage (4AC) et/ou l'épissurage (4AD) et/ou l'accueil de systèmes de couplage et/ou le stockage de fibres optiques, agencées de façon à permettre un montage réversible à gauche ou à droite dudit plan.

8. Dispositif selon la revendication 5 ou 6, **caractérisé en ce que** l'intérieur dudit module (4′) comporte une platine pivotante (11′) apte à recevoir un ensemble de pièces permettant le guidage (11′A) et/ou l'épissurage (11′B) et/ou l'accueil de systèmes de couplage et/ou le stockage de fibres optiques, agencées de façon à permettre un montage réversible à gauche ou à droite dudit plan.

## Patentansprüche

1. Optisches Telekommunikationsmodul (4, 4'), umfassend ein Gehäuse aus Kunststoff und eine vordere Anpassungsplatte (10, 10', 10"), die auf der Vorderseite des Moduls montiert ist, wobei die vordere Anpassungsplatte (10, 10', 10") aus Metall ist und eine Mischplatte ist, die mit einer Vielzahl von Öffnungen (10'A, 10"A) versehen ist, die ausgelegt sind, um jeweils mindestens einen Verbinder (20) aufzunehmen, **dadurch gekennzeichnet, dass** jede der Öffnungen (10'A, 10"A) einen seitlichen hinteren Flansch (10'B, 10"B) aufweist, der ausgelegt ist um ein Federblatt (20B) der Verbinder vorzuspannen.

2. Modul nach Anspruch 1, **dadurch gekennzeichnet, dass** die vordere Anpassungsplatte (10, 10', 10") seitlich auf das Gehäuse geschraubt ist.

3. Modul nach Anspruch 1 oder 2, **dadurch gekennzeichnet, dass** die vordere Anpassungsplatte (10, 10', 10") aus Stahl ist.

4. Vorrichtung aus schwenkbaren optischen Telekommunikationsmodulen aus Kunststoff, umfassend mindestens einen Montagerahmen (1A, 1B, 1C), mindestens ein optisches Telekommunikationsmodul (4, 4') nach einem der vorhergehenden Ansprüche und einen seitlichen Stützteil (2, 2') für jedes Modul, wobei das Modul ausgelegt ist, um vom Montagerahmen mit Hilfe des seitlichen Stützteils gestützt zu werden, wobei die Vorrichtung **dadurch gekennzeichnet ist, dass** der seitliche Stützteil (2) mindestens eine erste zylindrische Schwenkanordnung (3) umfasst, wobei das Modul mindestens eine zweite seitliche Schwenkanordnung (4A, 43', 44') umfasst, die konfiguriert ist, um auf der ersten Schwenkanordnung verbunden zu sein, wobei das Modul zwei Einheiten von mindestens einer zweiten symmetrischen seitlichen Schwenkanordnung (4A, 43', 44') mit Bezug auf eine zentrale Querebene (P) des Moduls umfasst und konfiguriert, damit die eine auf der oder den ersten Schwenkanordnung(en) eines Stützteils (2, 2'), der links von der Ebene (P) montiert ist, verbunden ist, oder die andere auf der oder den ersten Schwenkanordnung(en) eines Stützteils (2, 2'), der rechts von der Ebene (P) montiert ist, verbunden ist.

5. Vorrichtung nach dem vorhergehenden Anspruch, **dadurch gekennzeichnet, dass** die zwei Einheiten von mindestens einer zweiten symmetrischen seitlichen Schwenkanordnung (4A, 43', 44') konfiguriert sind, um auf der oder den ersten Schwenkanordnung(en)des Stützteils (2, 2') verbunden zu sein.

6. Vorrichtung nach dem vorhergehenden Anspruch, **dadurch gekennzeichnet, dass** die erste Schwenkanordnung ein Drehzapfen ist und die zweite Schwenkanordnung ein Schwenkhohlraum ist.

7. Vorrichtung nach Anspruch 5 oder 6, **dadurch gekennzeichnet, dass** das Innere des Moduls (4) einen Boden aufweist, der konfiguriert ist, um eine Einheit von Teilen aufzunehmen, die die Führung (4AC) und/oder das Spleißen (4AD) und/oder die Aufnahme von Kopplungssystemen und/oder die Speicherung von optischen Fasern ermöglichen, die derart angeordnet sind, dass sie eine reversible Montage links oder rechts von der Ebene ermöglichen.

8. Vorrichtung nach Anspruch 5 oder 6, **dadurch gekennzeichnet, dass** das Innere des Moduls (4') eine schwenkbare Platine (11') umfasst, die ausgelegt ist, um eine Einheit von Teilen aufzunehmen, die die Führung (11'A) und/oder das Spleißen (11'B) und/oder die Aufnahme von Kopplungssystemen und/oder die Speicherung von optischen Fasern ermöglicht, die derart angeordnet sind, dass sie eine reversible Montage links oder rechts von der Ebene ermöglichen.

## Claims

1. An optical telecommunication module (4, 4') comprising a plastic casing and a front adapter plate (10, 10', 10") mounted at the front of the module, said front adapter plate (10, 10', 10") being made from metal and being a patch plate provided with a plurality of orifices (10'A, 10"A) intended each to receive at least one connector (20), **characterized in that** each said orifice (10'A, 10"A) has a lateral rear flange (10'B, 10"B), intended to prestress a spring blade (20B) of said connectors.

2. The module according to claim 1, **characterized in that** said front adapter plate (10, 10', 10") is screwed laterally on said casing.

3. The module according to claim 1 or 2, **characterized in that** said front adapter plate (10, 10', 10") is made from steel.

4. A device for pivoting optical telecommunication modules made from plastic material, comprising at least one mounting frame (1A, 1B, 1C), at least one optical telecommunication module (4, 4') according to one of the preceding claims, and a lateral support part (2, 2') for each module, said module being intended to be supported by the assembly frame by means of said lateral support part, the device being **characterized in that** the lateral support part (2) includes at least one first cylindrical pivoting arrangement (3), the module including at least one second lateral pivoting arrangement (4A, 43', 44') configured to be connected on said first lateral pivoting arrangement, said module including two assemblies of at least one second lateral pivoting arrangement (4A, 43', 44') that are symmetrical relative to a central transverse plane (P) of the module and that are configured to be connected, one on the first pivoting arrangement(s) of a support part (2, 2') mounted to the left of said plane (P), or the other on the first pivoting arrangement(s) of a support part (2, 2') mounted to the right of said plane (P).

5. The device according to the preceding claim, **characterized in that** said two assemblies of at least one second lateral pivoting arrangement (4A, 43', 44') are configured to be clipped on the first pivoting arrangement(s) of said support part (2, 2').

6. The device according to the preceding claim, **characterized in that** said first pivoting arrangement is a pivot and said second pivoting arrangement is a pivot cavity.

7. The device according to claim 5 or 6, **characterized in that** the inside of said module (4) has a bottom configured to receive a set of parts allowing the guidance (4AC) and/or the splicing (4AD) and/or the reception of systems for coupling and/or storing optical fibers, arranged so as to allow a reversible assembly to the left or to the right of said plane.

8. The device according to claim 5 or 6, **characterized in that** the inside of said module (4') includes a pivoting plate (11') capable of receiving a set of parts allowing the guiding (11'A) and/or the splicing (11'B) and/or the reception of systems for coupling and/or storing optical fibers, arranged so as to allow a reversible assembly to the left or to the right of said plane.
